# EUROPEAN PATENT SPECIFICATION

(11) **EP 3 092 338 B1**
(45) Date of publication and mention of the grant of the patent: **10.10.2018**
(21) Application number: 15700045.6
(22) Date of filing: 06.01.2015
(51) Int. Cl.: D21C 3/20, C10L 1/02

(54) **PROCESS FOR PREPARING NON-PYROLYTIC BIO-OIL FROM LIGNOCELLULOSIC MATERIALS**
VERFAHREN ZUR HERSTELLUNG VON NICHTPYROLYTISCHEM BIOÖL AUS LIGNOCELLULOSEMATERIALIEN
PROCÉDÉ DE PRODUCTION DE BIO-HUILE À PARTIR DE MATIÈRES LIGNO-CELLULOSIQUES NON-PYROLYTIQUES

(30) Priority: 07.01.2014 EP 14150383
(43) Date of publication of application: 16.11.2016
(73) Proprietor: Studiengesellschaft Kohle MbH, 45470 Mülheim an der Ruhr (DE)
(72) Inventor: RINALDI, Roberto, 45468 Mülheim an der Ruhr (DE); FERRINI, Paola, 45468 Mülheim an der Ruhr (DE)
(86) International application number: PCT/EP2015/050101
(87) International publication number: WO 2015/104262

(56) References cited:
- CA-A1- 1 131 415
- US-A- 4 594 130

## Description

The present invention refers to a process for the catalytic fractionation of plant biomass, producing non-pyrolytic bio-oil from lignocellulosic materials in addition to a high-quality pulp comprising cellulose and hemicellulose as a byproduct. The invention utilizes a transition metal catalyst for the treatment of lignocellulosic materials (e.g. wood, straw, sugar cane bagasse and crop residues) in order to convert lignin into a non-pyrolytic bio-oil by hydrogen transfer reactions. The so-obtained non-pyrolytic bio-oil is mainly composed of phenolic compounds (e.g. lignin fragments) presenting a low molecular weight. This feature leads to feedstock easier to process with further catalytic reactions. The high-quality pulp is suitable for paper production and enzymatic saccharification. The inventive process is useful for a variety of interesting applications, leading in a single step to high quality pulp and non-pyrolytic bio-oil that mostly comprises phenols in addition to cyclohexanones, cyclohexanols and cycloalkanes as minor products.

Efficient catalytic processes are required for exploiting alternative sources of carbon (e.g. lignocelluloses) to the fullest, diminishing modern society's reliance on crude oil. In this context, lignocelluloses (e.g. wood, grass, crops residues and several others) show great potential as part of the solution for decreasing the reliance of modern societies on fossil resources. However, the direct conversion of these renewable carbon sources by chemical and biotechnological processes is hindered by their complex polymeric nature. In plant biomass, three polymers - cellulose, hemicellulose and lignin - form a complex and highly recalcitrant composite that creates the plant cell walls. Accordingly, many alternative pathways beginning with lignocellulosic biomass rely upon pyrolysis or gasification processes to extensively break down the highly recalcitrant composite, delivering pyrolysis oil or synthesis gas. While these routes deliver chemical streams that could be further processed by well-known technologies (e.g. hydrotreatment, Fischer-Tropsch synthesis, methanol synthesis, etc), many challenges remain to tackle in order to improve the chemical quality of the lignocellulose-derived streams and take full advantage of the mature technologies for production of synthetic fuels (e.g. Fischer-Tropsch synthesis).

Converting plant biomass into bio-oil by pyrolysis is part of a portfolio of solutions currently in development for the production of engine fuels. In the fast pyrolysis of wood to bio-oil, an increase in energy density by a factor of 7 to 8 is achieved (P. M. Mortensen, J. D. Grunwaldt, P. A. Jensen, K. G. Knudsen and A. D. Jensen, Appl. Catal. A-Gen., 2011, 407, 1-19). In spite of this, with an oxygen-content as high as 40 wt%, bio-oil still has a much lower energy density than crude oil. Furthermore, the high-oxygen content makes bio-oil unstable on storage. Consequently, its viscosity increases and polymeric particles are also formed. To circumvent these problems, the upgrade of bio-oil, decreasing its oxygen-content and its reactivity, is needed. There are two general routes for upgrading bio-oils as discussed in great detail in (P. M. Mortensen, J. D. Grunwaldt, P. A. Jensen, K. G. Knudsen and A. D. Jensen, Appl. Catal. A-Gen., 2011, 407, 1-19), namely hydrodeoxygenation (HDO) and "zeolite cracking". These routes are outlined as the most promising avenues to convert bio-oils into engine fuels. In HDO processes, bio-oil is subjected to high pressures of H₂ (80 - 300 bar) and to high temperatures (300 - 400 °C) for reaction times up to 4 h. In the best cases, these processes lead to an 84 % yield of oil. The HDO processes are performed with sulfide-based catalysts or noble metal supported catalysts. In the cracking of bio-oil using zeolites, the upgrade is conducted under lower pressures for less than 1 h, but temperatures up to 500 °C are necessary for obtaining yields of oil as high as 24 %. In both processes, the severity of the process conditions poses a major problem for the energy-efficient upgrading of bio-oil.

The conversion of the whole plant biomass by pyrolysis not only leads to pyrolytic bio-oils but also to gaseous products in addition to biochar. As matter of fact, a considerable quantity of renewable carbon is then lost by the undesirable formation of gaseous products and biochar.

The pyrolytic pathway completely breaks down the complex biomolecules, albeit part of their structure is useful as building blocks for a number of different target molecules. Efficient approaches for rationally disassembling lignocellulose, in order to incorporate the existing chemical functionalities in the final products, could be more advantageous for biomass utilization for the production of platform chemicals, compared with the biomass pyrolysis.

Envisioning the production of biofuels and platform chemicals from lignocellulose, an ideal fractionation process should provide a carbohydrate fraction (pulp) with low lignin, and a lignin fraction amendable to process under low-severity conditions. Previous technologies in place for wood pulping are not likely to meet the needs for the production of biofuels and platform chemicals from lignocellulose. First, and of utmost importance for the paper industry, the main goal of any pulping process is to deliver high strength fibers of cellulose suitable for paper production and other cellulose-based products. Such cellulose presents a high degree of polymerization and high crystallinity. These properties pose major problems to chemical and enzymatic hydrolytic processes. Second, and of importance for lignocellulose biorefineries, the separation of lignin and hemicellulose from the cellulosic fibers is nowadays performed by the chemical degradation of these valuable biomass fractions. Therefore, in conventional pulping processes a large fraction of the renewable carbon from plant biomass is transformed into even more recalcitrant byproducts (e.g. Kraft lignin), strongly reducing their potential as feedstock for the production of value-added products. Altogether, there is thus a substantial need for novel processes able to fractionate plant biomass, enabling the efficient downstream processing of the fractions toward the production of biofuels and platform chemicals.

Unlike cellulose, lignin has its structure dramatically modified after the pretreatment. The modifications depend upon the fractionation method. The main chemical pulping process is Kraft pulping. In this process, wood is subjected to treatments in the presence of sulfide, sulfhydryl and polysulfide species at high pH, this leads to degradation and solubilization of hemicelluloses and lignin fragments in a so-called black liquor. The high sulfur-content and high degree of condensation of Kraft lignin create obstacles to chemical and material utilization of Kraft lignin for the production of high value-added chemical assets. Therefore, this lignin is generally used as fuel in the pulp and paper industry to recover the inorganic chemicals utilized by the pulping process.

For example, CA 1131415 and its US equivalent US4594130 describe a process for treating lignocellulose with a solvent mixture comprised of water, methyl alcohol, and a dissolved metal salt catalyst in a pressure vessel at a temperature in the range 180°C to 210°C to produce a chemical pulp of fibrous material. The metal salt catalyst is a chloride or nitrate of one of the metals calcium, magnesium or barium, and is useful in concentrations between 0.005 molar to 1.0 molar. The functions and effects of the metal salt catalysts are essentially serving both as a proton-generating agent as well as providing protection to the cellulose especially at the later stages of the cooking against degradation by hydrolytic solvolysis. According to said process, the metal salt catalyst shall be recoverable, but the description of the process is silent how to achieve such recovering of the soluble salt from a solution thereof. The process does not make use a metal catalyst, but of metal salt only and thus, the process is different to the process of the present invention.

Another used method of biomass pretreatment is lignosulfonate process. In this case, the lignin obtained has a higher degree of sulfonation, compared with those obtained by the Kraft process.

A promising approach for the separation of lignin from biomass, without the use of sulfur-containing chemicals, is the organosolv process. In this process, delignification of wood is performed by organic solvents. This process has been the subject of considerable research activity since the idea was introduced in the early 20^{th} century. However, much of the research activity has been taking place in recent years. Most of the innovation in this field is directed towards identification of efficient solvent systems and optimum process conditions. Utilization of solid catalysts in combination with solvent extraction of lignin is not described in the literature.

The organosolv process has been examined on a pilot scale as an alternative to the Kraft process in the pulp industry. The raw material is treated with organic solvent, usually a mixture of low molecular weight alcohols (e.g. ethanol) and water, at a temperature between 120 and 250 °C. After fractionation, lignin can be burned as sulfur-free fuel in order to provide energy for the process. In the last years, new biorefinery approaches are leading to the conversion of lignin into more valuable products, such as liquid fuel additives or chemicals.

Until recently, very little work has been done to understand the fundamental aspects of these systems, so little detailed information is available on their mechanisms. In contrast, the mechanisms of the Kraft and sulfite pulping processes and their variants have been studied in detail, and there has been considerable basic work on nonaqueous lignin solvolysis, albeit most of it has not been primarily directed towards understanding the related industrial processes. For example, numerous studies have been done for the purpose of elucidating lignin structure by analyzing its solvolysis products. As a result, there is a substantial amount of information that serves as a basis for inferences concerning organosolv pulping mechanisms, and eventually facilitates further development of organosolv pulping technology.

The inventors recognized that the main challenge of conversion of native lignin is the cleavage of the linkages between the monomeric fragments, composed mainly (80%) of ether bonds (X. Wang, R. Rinaldi, ChemSusChem, 2012, 5, 1455-1466). Recent work of the inventors demonstrated that it is possible to perform hydrogenolysis of lignin model compounds via hydrogen transfer in the presence of skeletal Ni catalyst as catalyst and 2-propanol (2-PrOH) as a hydrogen-donor (X. Wang, R. Rinaldi, Energy Environ. Sci., 2012, 5, 8244-8260).

The inventors have now discovered that the processing of wood in a mixture of organic solvents in the presence of metal catalyst leads to extraction and deep depolymerization of lignin, yielding a non-pyrolytic bio-oil rich in phenols in addition to a pulp containing cellulose and hemicellulose. No external pressure of molecular hydrogen is supplied to the system. The inventors have developed the present process as a new approach for biomass conversion. In the following, the new process is introduced and subsequently, the analysis of the lignin products obtained by the new process in form of oil is given, thus demonstrating that direct depolymerization of lignin from biomass is possible. A side, but very important aspect of the invention is the production of a pulp in high yields and with low structural modifications from the process. This pulp undergoes enzymatic hydrolysis in the presence of commercial cellulases preparations.

In the inventive process, wood is treated with an organic solvent and H-donor (e.g. secondary alcohols, preferably 2-propanol and 2-butanol), mixtures of different organic solvents (e.g., primary and secondary alcohols) including a mixture thereof with water in the presence of metal catalyst. The process is performed in absence of externally supplied pressure of hydrogen. The reaction mixture can be separated into two fractions, the first one being the non-pyrolytic bio-oil and the second one a solid fraction of pulp.

The H-donor is generally selected from secondary alcohols having 3 to 8 carbon atoms, preferably 2-PrOH, 2-butanol, 2-cyclohexanol or mixtures thereof. Cyclic alkenes, comprising 6 to 10 carbon atoms, preferably cyclohexene, tetraline or mixtures thereof can be used as H-donor. In addition, formic acid can be also used as H-donor. Furthermore, polyols comprising 2 to 9 carbon atoms can be used as H-donor, preferably ethylene glycol, propylene glycols, erythritol, xylitol, sorbitol, mannitol and cyclohexanediols or mixtures thereof. Saccharides selected from glucose, fructose, mannose, xylose, cellobiose and sucrose can be also used as H-donor.

Lignin formed in-situ or added to the system can be used as an H-donor.

As a metal catalyst, any transition metal can be used as much as it is suitable for building up a catalyst skeleton catalyst. The metal catalyst can be suitably a skeletal transition metal catalyst or supported transition metal catalyst or mixture, preferably skeletal nickel, iron, cobalt or copper catalysts or a mixture thereof. Generally, the metal can be selected from nickel, iron, cobalt, copper, ruthenium, palladium, rhodium, osmium iridium, rhenium or mixtures thereof, preferably nickel, iron, cobalt, ruthenium, copper or any mixture thereof. Metal catalysts prepared by the reduction of mixed oxides of the above mentioned elements in combination with aluminum, silica and metals from the Group I and II can also be used in the process.

As an option, the catalyst can be a bifunctional solid comprising metal functionality and acid sites wherein said acid sites being preferably functional sites having acidic Bronsted or Lewis functionality or both.

In an example, the combined process consists of a batch reaction in which wood pellets are treated with organic solvents (2-PrOH, 2-PrOH-water mixtures, 2-PrOH-methanol, 2-PrOH-methanol-water, 2-butanol-methanol, 2-butanol-methanol-water, ethanol-water) with the addition of skeletal Ni catalyst as a catalyst for the depolymerization and reduction of lignin fragments. No gaseous hydrogen is added. The process is performed under autogeneous pressure only. After the process completion, skeletal Ni catalyst is easily separated from the product mixture by means of a magnet, since skeletal Ni catalyst and Ni catalysts show magnetic properties. Other skeletal catalysts having magnetic properties can also be used. The catalyst-free mixture is then filtered in order to separate the solution comprising the raw non-pyrolytic bio-oil and pulp (solid carbohydrate fraction). After distillation of the solvent mixture, the non-pyrolytic bio-oil is isolated.

The advantages of this process over the current state-of-art are several:
- The production of a bio-oil rich in phenols does not involve the pyrolysis of the lignocellulosic substrate. Accordingly, the carbohydrate fraction of biomass (cellulose and hemicellulose) is not destroyed, and can be thus utilized as a raw material for further processing in a biorefinery or pulp and paper industry.
- The lignin fraction is deeply depolymerized, that is, this fraction is not recovered as a solid, such as the organosolv lignin, but as a non-pyrolytic bio-oil.
- The carbohydrate fraction undergoes enzymatic hydrolysis producing high yields of fermentable sugars.
- The non-pyrolytic bio-oil is converted into cyclic alcohols and other cyclic compounds with ease, while organosolv lignin due to its polymeric nature is only partially converted even under high severity conditions.
- The process is performed in absence of externally supplied molecular hydrogen. In effect, the costs associated with the reactors resistant to molecular hydrogen are fully avoided.
- The process is environmentally friendly, compared with the state-of-the art pulping processes (e.g., Kraft, sulfite and organosolv processes), because it is performed under conditions of lower severity (low temperatures). The process does not use aggressive chemicals (e.g. sulfides).
- The process is catalytic. In contrast, the state-of-art processes are stoichiometric.

The nickel catalyst is recyclable for many times that mitigates the waste generation.
- The quality and properties of the process can be tuned by adjusting the catalyst or the solvent mixture used.
- The process is applicable to softwoods, hardwoods and perennial grasses.

In more detail, the present invention refers to a process for production of non-pyrolytic bio-oil rich in phenolic compounds and a pulp rich in cellulose and hemicellulose by H-transfer reactions performed on lignocellulosic substrates in the presence of skeletal Ni catalyst or other metal catalyst in addition to a H-donor (an alcohol) comprising the steps of:
a. subjecting preferably particulate lignocellulose material to a treatment at the temperature range from 130 °C to 300 °C, preferably 160 °C to 260 °C, most preferably 170 °C to 240 °C, in a solvent system comprising an organic solvent or mixture of solvents being miscible with water, in the presence of a transition metal catalyst, preferably skeletal Ni catalyst, in absence of externally supplied molecular hydrogen, under autogeneous pressure in a reaction vessel for a reaction time of 0.01 to 8 hours,
b. removing the catalyst from the reaction mixture, preferably by means of magnetic forces,
c. filtering the reaction mixture to separate the raw non-pyrolytic bio-oil from the pulp, and optionally
d. removing the solvent system from the filtrate to concentrate the non-pyrolytic bio-oil;
wherein the transition metal catalyst is used at weight ratio of catalyst-to-substrate from 0.001 to 10.

In the inventive process the lignocellulose material is preferably a particulate material and and a biomass such as hardwood, softwood, straw, sugar cane bagasse, perennial grasses and crop residues, and others.

The process can be performed as a one-pot process, that is, substrate and catalyst are suspended in a solvent mixture and cooked at the temperature ranges aforementioned.

Alternatively, the process can be carried out as a multi-stage process in which the liquor obtained from the reaction where the substrate is cooked is continuously transferred into another reactor comprising the catalyst, and the processed liquor returned to the main reactor where the substrate is cooked.

The inventive process is applicable to any type of lignin containing material from any type of hardwood, softwood and perennial grass.

As mentioned above, the solvent system comprises an organic solvent or mixtures thereof being miscible with water and is preferably selected from lower aliphatic alcohols having 1 to 6 carbon atoms and one to three hydroxy groups, preferably methanol, ethanol, propanol, 2-propanol and 2-butanol or mixtures thereof. Thus, the solvent system can be a solvent mixture of at least one lower aliphatic alcohol having 1 to 6 carbon atoms and water, preferably in a v/v-ratio of 99.9/0.1 to 0.1/99.9, preferably 10/90 to 90/10, most preferably 20/80 to 80/20, alcohol/water solutions.

In particular, the solvent system is a solvent mixture of secondary alcohols (e.g. 2-PrOH, 2-butanol, cyclohexanol) and water in a v/v-ratio of 80/20 to 20/80, alcohol/water solutions.

Other solvents, such as aliphatic or aromatic ketones having 1 to 10 carbon atoms, ethers having 2 to 10 carbon atoms, cyclohexanols, cyclic ethers (preferably, tetrahydrofuran, methyltetrahydrofurans or dioxanes) and esters (preferably, ethylacetate and methylacetate) can be added into the solvent fraction as modifiers in order to adjust the phenol content in the obtained non-pyrolytic bio-oil. The volume fraction of the modifier in the solvent mixture, also containing secondary alcohol or mixture thereof and eventually water, ranges from 0.1 to 99.9 %, preferably 1 to 95 %, most preferably 5 to 70 %

The process is operated at a weight ratio of catalyst-to-substrate from 0.001 to 10, preferably 0.01 to 5, more preferably 0.05 to 2.

The inventive process can yield a pulp having a content of cellulose of 68 to 84-wt%, a low lignin content 4 to 11-wt% and a high degree of crystallinity of 50-70 %.

In the inventive process, the non-pyrolytic bio-oil can show a phenol content of 1 to 99-wt%.

Thus, the present inventors have demonstrated a new and inventive catalytic process for the extraction of lignin from lignocellulosic substrates in the presence of skeletal Ni catalyst and under low-severity conditions. The so-obtained products in the non-pyrolytic bio-oil present a low molecular weight and thus low degree of condensation by C-C and C-O linkages. In addition, these properties leads to a feed easier to process with further catalytic reactions, compared with the polymeric solid organosolv lignin and other technical lignins. A solvent mixture of 2-PrOH and water 70:30 (v/v) at temperatures above 180 °C almost fully extract lignin from the lignocellulosic matrix. In the lignin products, vinyl and carbonylic groups, such as carboxylic acids, ketones, aldehydes, quinones are reduced, while the phenolic structure are largely preserved.

The conditions mentioned above lead also to the best pulp, with high amount of cellulose (68-84 wt%), low lignin content (4-11 wt%) and high crystallinity (above 60 %). Analyses of the pulps demonstrate that the structure of the carbohydrate fraction is maintained during the reaction. This process can find interesting applications, leading in a single-step to high quality pulp and valuable lignin products.

### Brief description of the drawings

The invention is further illustrated by the drawings. In more detail,
Figure 1 shows a comparison of the visual appearance of the products obtained from organosolv process (state-of-art) and by the inventive process described in this application;
Figure 2 illustrates the distribution of apparent molecular weight determined by gel permeation chromatography (GPC) relative to polystyrene standards;
Figure 3 shows X-ray powder diffraction patterns for pulps obtained from organosolv process (in absence of skeletal Ni catalyst) and catalytic fractionation (CF) in the presence of skeletal Ni catalyst under varying conditions. The values in parentheses refer to the crystallinity index determined for the pulps;
Figure 4 shows the glucose yields resulting from enzymatic saccharification of the pulps obtained from fractionation under varying conditions.

### Results

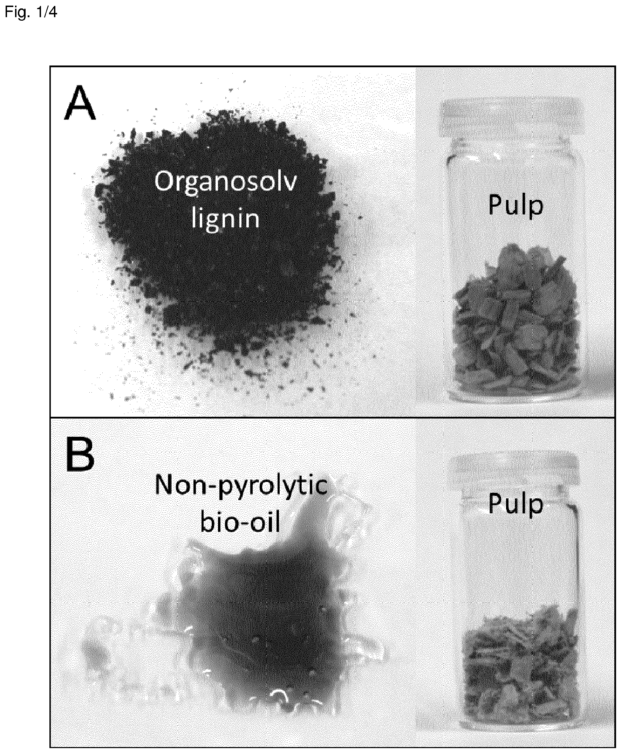

Figure 1 compares the visual appearance of the products obtained from organosolv process (state-of-art) and by the innovative process described in this application. Both process lead to pulps with low lignin-content. In the organosolv process performed in 2-PrOH/water (7:3, v/v) at 180 °C for 3 h, lignin is recovered as a black-brownish solid (weight yield of 30 % after distillation and recovery of the solvent mixture, as illustrated in Figure 1A). The organosolv lignin is hard solid; its comminution is not easy to perform. The deposition of organosolv lignin in pipelines or ovens may create problems in an industrial plant since it may block pipelines or drying systems. Moreover, the solid lignin is less reactive than the non-pyrolytic bio-oil towards hydrogenation. The innovative process, in the presence of skeletal Ni catalyst, produces brown oil (carried out in the presence of skeletal Ni catalyst and 2-PrOH/water (7:3, v/v) at 180 °C for 3 h and as illustrated in Figure 1B) after solvent removal. This non-pyrolytic bio-oil is easy to remove and transfer to further process reactors. The product from the innovative process is a pulp and a non-pyrolytic bio-oil mostly comprising lignin-derived phenolics or derivatives thereof.

Table 1 summarizes the yields of non-pyrolytic bio-oil (lignin products) and pulps recovered from the catalytic fractionation of poplar wood (or other feedstocks) in the presence of skeletal Ni catalyst under varying conditions. Weight yields of non-pyrolytic oil are 13 to 29 wt% relative to initial weight of the substrate (on a dry and ash-free basis). Weight yields of pulp are 52 to 92 wt% relative to initial weight of the substrate (on a dry and ash-free basis). The presence of water in the solvent solution improves the extraction of lignin from lignocellulosic matrix, and consequently increases the yield of non-pyrolytic bio-oil.

**Table 1 - Weight yields of non-pyrolytic bio-oil and pulp (given as dry and ash-free values)**

| Entry | T (°C) | Solvent | Non-pyrolytic bio-oil (wt%) | Pulp (wt%) |
|---|---|---|---|---|
| 1 | 160 | 2-PrOH/H₂O (7:3, v/v) | 15 | 81 |
| 2 | 180 | 2-PrOH/H₂O (7:3, v/v) | 23 | 71 |
| 3 | 200 | 2-PrOH/H₂O (7:3, v/v) | 22 | 55 |
| 4 | 220 | 2-PrOH/H₂O (7:3, v/v) | 26 | 52 |
| 5 | 180 | 2-PrOH | 13 | 86 |
| 6 | 180 | 2-PrOH/MeOH (10:1, v/v) | 14 | 92 |
| 7 | 180 | 2-PrOH/H₂O (9:1, v/v) | 13 | 76 |
| 8 | 180 | 2-PrOH/H₂O (8:2, v/v) | 20 | 70 |
| 9 | 180 | 2-PrOH/H₂O (5:5, v/v) | 26 | 75 |
| 10 ^{(a)} | 200 | 2-PrOH/H₂O (7:3, v/v) | 29 | 52 |
| 11 | 200 | EtOH/H₂O (7:3, v/v) | 31 | 53 |
| 12 ^{(a)} | 200 | EtOH/H₂O (7:3, v/v) | 28 | 54 |
| 13 ^{(b)} | 180 | 2-PrOH/H₂O (7:3, v/v) | 16 | 77 |
| 14 ^{(c)} | 180 | 2-PrOH/H₂O (7:3, v/v) | 29 | 75 |

| | | | | |
|---|---|---|---|---|
| (a) 50 bar H₂ added (b) spruce wood (c) sugarcane bagasse | | | | |

### Characterization of the non-pyrolytic bio-oils

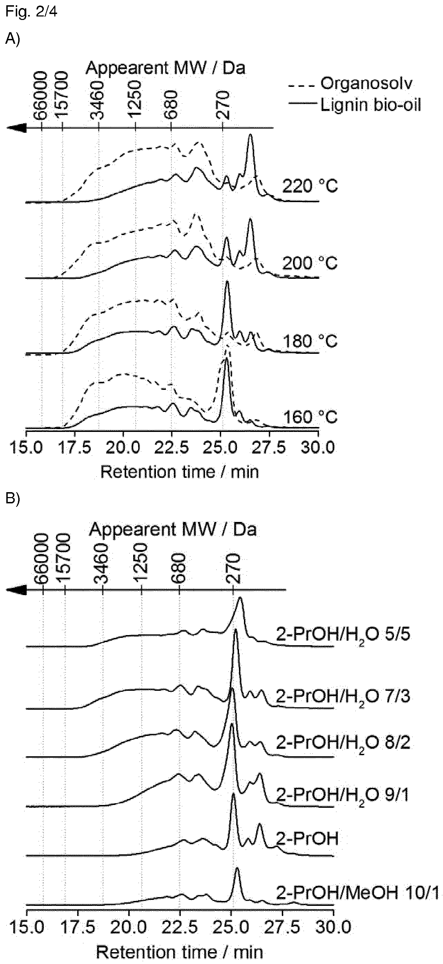

Figures 2 A) to D) show the distribution of apparent molecular weight determined by gel permeation chromatography (GPC) relative to polystyrene standards:
A) Effect of temperature on lignin products obtained in absence (organosolv) or in presence (lignin bio-oil) of Raney Ni in 2-propanol/water (7:3 v/v) mixture;
B) Effect of solvents on lignin products obtained in presence of Raney Ni at 180 °C;
C) Effect of absence or presence of gaseous H₂ in lignin products ontained in presence of Raney Ni;
D) Effect of the substrate on lignin products obtained in absence (organosolv) or presence (lignin bio-oil) of Raney Ni.

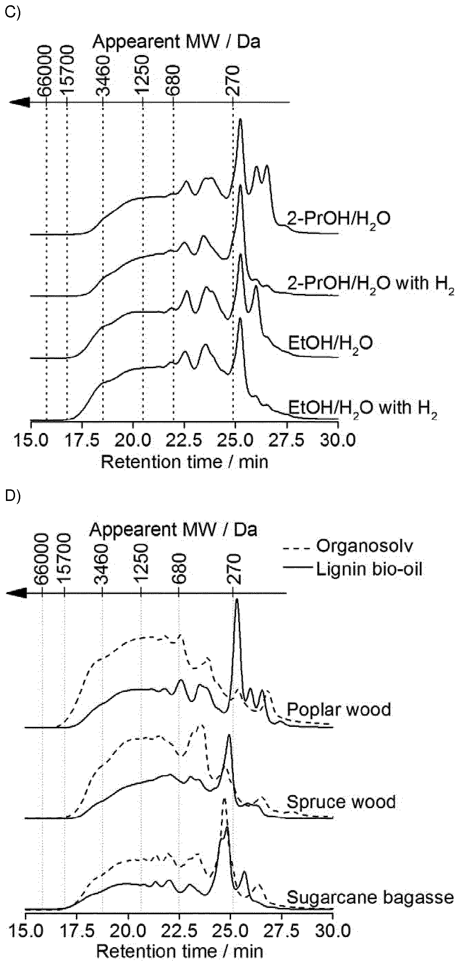

Organosolv lignins (Figure 2A) display an apparent molecular weight distribution between 200 and 15000 Da, and no significant changes can be observed with increasing the temperature of the organosolv process from 160 to 220 °C. The chromatograms of the non-pyrolytic bio-oils (Figure 2A-C) show that products have lower molecular weight (100-10000 Da) compared to organosolv lignin. Process temperature influences positively the depolymerization of lignin, leading to a decrease of molecular weight with the increasing of process temperature from 160 to 220 °C (Figure 2A). Depolymerization is also influenced by the solvent composition: increase in 2-propanol/water ratio causes a decrease in molecular weight (Figure 2B). Lignin products recovered from process in 2-propanol show molecular weight lower than 3000 Da. Despite the inhibition of skeletal Ni catalyst due to the presence of methanol (MeOH), also the reaction performed in the mixture 2-PrOH/MeOH comprises highly depolymerized products, with molecular weight below 3000 Da. Figure 2C displays the comparison of non-pyrolytic lignin bio-oils obtained in presence and in absence of molecular hydrogen in different solvents. No significant differences can be observed in the molecular weight distribution, demonstrating the ability of skeletal Ni catalyst to perform hydrogenolysis *via* H-transfer from 2-propanol or ethanol. Finally, Figure 2D presents the chromatograms of organosolv lignins and lignin bio-oils obtained from different feedstocks. The results confirm the applicability of the process to various lignocellulosic sources. In all the cases, the addition of skeletal Ni catalyst to the fractionation process leads to low molecular weight products.

Low molecular weight compounds detected with GPC were analyzed by two dimensional gas-chromatography coupled to a mass spectrometer (GCxGC-MS, for product identification) and to a flame ionization detector (GCxGC-FID, for product semi-quantification). Table 2 summarizes the results obtained by GCxGC-MS of the non-pyrolytic bio-oils. The products from the reference process (organosolv lignin) were nonvolatile due to their polymeric nature. The catalytic fractionation of wood in the presence of skeletal Ni catalyst results in non-pyrolytic bio-oils comprising detectable low molecular weight compounds that are volatile and thus analyzable by GCxGC-MS. The non-pyrolytic bio-oils comprise polyols, phenols, methoxyphenols and saturated products thereof. The increase in the process temperature from 160 to 220 °C results in further saturation of the phenol products, as shown in Table 2, entries 1 to 4, leading to an increase in the cyclohexanol content (from 3 to 12 %). When the catalytic fractionation is performed in 2PrOH at 180 for 3 h (Table 2, entry 5), transfer hydrogenation is enhanced, leading to numerous cyclohexanol products (21 %). Despite the higher hydrogenation activity, the product mixture from reaction in 2-PrOH still presents a considerable amount of aromatic compounds (59 %, Table 2, entry 5). The reaction in 2-PrOH/MeOH mixture was performed in order to demonstrate an example in which the hydrogenation of aromatic rings is suppressed. Indeed, under these conditions, methoxyphenols are the major products (81 %, Table 2, entry 6)

**Table 2 - Distribution of the main classes of compounds found for the non-pyrolytic bio-oil as estimated bv GCxGC-MS and GCxGC-FID**

| Entry | T (°C) | Solvent | Phenols | Polyols | Cyclohexanols |
|---|---|---|---|---|---|
| 1 | 160 | 2-PrOH/H₂O (7:3, v/v) | 84 | 14 | 3 |
| 2 | 180 | 2-PrOH/H₂O (7:3, v/v) | 73 | 21 | 6 |
| 3 | 200 | 2-PrOH/H₂O (7:3, v/v) | 67 | 27 | 6 |
| 4 | 220 | 2-PrOH/H₂O (7:3, v/v) | 60 | 28 | 12 |
| 5 | 180 | 2-PrOH | 59 | 20 | 21 |
| 6 | 180 | 2-PrOH/MeOH (10:1, v/v) | 81 | 16 | 3 |

### Characterization of the Pulps

To analyze the composition of the pulps, the materials were quantitatively saccharified with 72 wt% sulfuric acid (as described by J. F. Saeman, J. L. Bubl, E. E. Harris, Industrial and Engineering Chemistry, Analytical Edition, 1945, 17, 35-37). The pulps are mostly composed of polysaccharides (cellulose and hemicelluloses). They constitute about 70 wt% of poplar wood (Table 3, entry 1). Table 3 shows the composition of the poplar wood and their pulps in terms of glucans, xylans and Klason lignin.

**Table 3 - Composition of the starting material and pulps (daf) obtained by the reference process (organosolv process) and innovative process (catalytic fractionation) for a processing duration of 3 h at the indicated temperatures.**

| Entry | Solvent | T (°C) | Glucans (wt%) | Xylans (wt%) | Lignin (wt%) |
|---|---|---|---|---|---|
| 1^{a} | --- | --- | 52.5 ± 1.5 | 16.7 ± 0.3 | 29.8 ± 1.8 |
| 2^{b} | 2-PrOH/H₂O^{c} | 180 | 79.2 ± 4.1 | 11.4 ± 2.3 | 6.9 ± 0.8 |
| 3 | 2-PrOH/H₂O | 160 | 56.9 ± 2.0 | 14.3 ± 0.8 | 13.9 ± 0.1 |
| 4 | 2-PrOH/H₂O | 180 | 68.1 ± 0.3 | 11.2 ± 0.2 | 11.0 ± 0.2 |
| 5 | 2-PrOH/H₂O | 200 | 79.9 ± 0.1 | 9.1 ± 0.7 | 4.9 ± 0.1 |
| 6 | 2-PrOH/H₂O | 220 | 84.0 ± 2.6 | 6.9 ± 0.2 | 3.8 ± 0.4 |
| 7 | 2-PrOH | 180 | 53.5 ± 0.2 | 12.8 ± 0.2 | 18.2 ± 0.8 |
| 8 | 2-PrOH/MeOH^{d} | 180 | 56.5 ± 0.7 | 13.6 ± 0.3 | 17.3 ± 0.9 |

| | | | | | |
|---|---|---|---|---|---|
| a) starting material (poplar wood); b) organosolv pulp (reference process); c) 2-PrOH/H₂O 7:3 (v/v); d) 2-PrOH/MeOH 10:1 (v/v) | | | | | |

The organosolv pulp comprises 79.2 ± 4.1 wt% cellulose and 11.4 ± 2.3 wt% hemicelluloses (Table 3, entry 2). The residual Klason lignin content is 6.9 ± 0.8. In the catalytic fractionation process, the increase in temperature from 160 to 220 °C (Table 3, entries 3-6) results in an increase in the glucans content (from ca. 57 to 84 %) in addition to a decrease in the xylans (from ca. 14 to 7 %) and residual Klason lignin contents (from ca. 14 to 4 %). The pulps obtained from the experiments in 2-PrOH or 2-PrOH/MeOH contain higher residual Klason lignin content (Table 3, entries 7 and 8) than that obtained from a experiment performed under similar conditions using instead 2-PrOH/H₂O 7:3 (v/v) as a process medium.

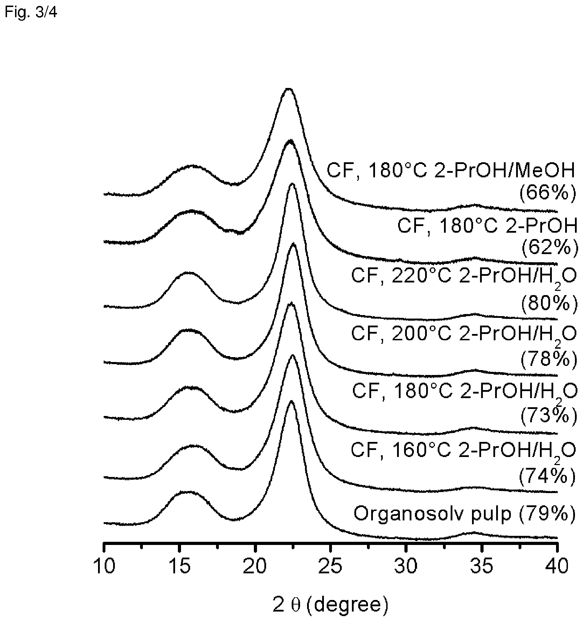

The crystallinity index (CI) was determined by X-ray diffraction (as reported by S. Park et al. Biotechnology for Biofuels 2010, 3:10). Figure 3 displays the powder X-ray diffraction patterns for the pulps described in Table 3, entries 2 to 8. CI values higher than 60 % for both the organosolv pulp and the catalytic fractionation (CF) pulps obtained under varying conditions. The severity of the catalytic fractionation process increases the crystallinity index of the pulps from 62 to 80 %.

### Enzymatic saccharification of the pulps obtained from fractionation under varying conditions

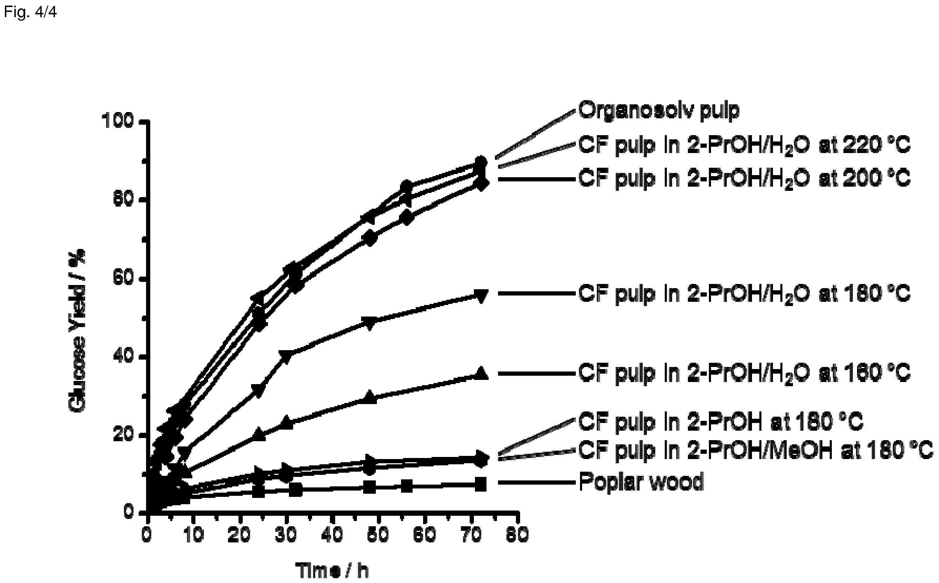

The pulps obtained by the catalytic fractionation of lignocellulose in the presence of skeletal Ni catalyst undergo hydrolysis to glucose in the presence of cellulases (Celluclast, Novozymes). The reaction conditions are: substrate (equivalent to 1 g of cellulose), cellulases (Celluclast, 350 U/g substrate), pH 4.7 (acetate buffer), 45 °C. Yields relative to the glucan content in each substrate. Figure 4 shows the glucose yields resulting from enzymatic saccharification of the pulps obtained from fractionation under varying conditions. While the starting material and pulps obtained in absence of water give low glucose yields even after 72 h of reaction, pulps obtained in presence of water, seem to be more susceptible to enzymatic hydrolysis. The catalytic fractionation at high temperatures (200 and 220 °C) as well as the organosolv method produced pulps highly susceptible to enzymatic hydrolysis. With these substrates, yields of glucose higher than 85 % were obtained after 72 h.

The present invention is explained in more detail by way of the following examples.

### Examples

The following examples are intended to illustrate the present invention without limiting the invention in any way.

### Example 1 - Reference process (Organosolv process)

Poplar wood (16-17 g, 2 mm pellets, Fa. J. Rettenmaier & Söhne) was suspended in a 140 mL solution of 2-PrOH:water (7:3, v/v) in a 250 mL autoclave equipped with a mechanical stirrer. The suspension was heated from 25 to 160 °C within 1 h under mechanical stirring. The autogenous pressure at 160 °C is 25 bar. The suspension was processed at 160 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a reddish-brown solid was obtained. In turn, the pulp was washed with acetone, and then dried under vacuum evaporation. From 16.7 g of poplar wood, 1.5 g of organosolv lignin and 13.2 g pulp were obtained.

### Example 2 - Reference process (Organosolv process)

Poplar wood (16-17 g, 2 mm pellets, Fa. J. Rettenmaier & Söhne) was suspended in a 140 mL solution of 2-PrOH:water (7:3, v/v) in a 250 mL autoclave equipped with a mechanical stirrer. The suspension was heated from 25 to 180 °C within 1 h under mechanical stirring. The autogenous pressure at 180 °C is 25 bar. The suspension was processed at 180 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a reddish-brown solid was obtained (Figure 1A). In turn, the pulp was washed with acetone, and then dried under vacuum evaporation. From 16.9 g of poplar wood, 4.6 g of organosolv lignin and 9.2 g pulp were obtained.

### Example 3 - Reference process (Organosolv process)

Poplar wood (16-17 g, 2 mm pellets, Fa. J. Rettenmaier & Söhne) was suspended in a 140 mL solution of 2-PrOH:water (7:3, v/v) in a 250 mL autoclave equipped with a mechanical stirrer. The suspension was heated from 25 to 200 °C within 1 h under mechanical stirring. The autogenous pressure at 200 °C is 35 bar. The suspension was processed at 200 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a reddish-brown solid was obtained. In turn, the pulp was washed with acetone, and then dried under vacuum evaporation. From 16.6 g of poplar wood, 5.8 g of organosolv lignin and 8.1 g pulp were obtained.

### Example 4 - Reference process (Organosolv process)

Poplar wood (16-17 g, 2 mm pellets, Fa. J. Rettenmaier & Söhne) was suspended in a 140 mL solution of 2-PrOH:water (7:3, v/v) in a 250 mL autoclave equipped with a mechanical stirrer. The suspension was heated from 25 to 220 °C within 1 h under mechanical stirring. The autogenous pressure at 220 °C is 45 bar. The suspension was processed at 220 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a reddish-brown solid was obtained. In turn, the pulp was washed with acetone, and then dried under vacuum evaporation. From 16.6 g of poplar wood, 5.4 g of organosolv lignin and 7.4 g pulp were obtained.

### Example 5 - Inventive process (catalytic fractionation of lignocellulose)

Poplar wood (16-17 g, 2 mm pellets, Fa. J. Rettenmaier & Söhne) and skeletal Ni catalyst (10 g, Raney Ni 2800 slurry, Sigma-Aldrich) was suspended in a 140 mL solution of 2-PrOH:water (7:3, v/v) in a 250 mL autoclave equipped with a mechanical stirrer. The suspension was heated from 25 to 160 °C within 1 h under mechanical stirring. The suspension was processed under autogeneous pressure at 160 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a brown oil (non-pyrolytic bio-oil) was obtained. In turn, the pulp was washed with acetone, and then dried under vacuum evaporation. From 16.7 g of Poplar wood, 2.3 g of non-pyrolytic bio-oil and 13.2 g pulp were obtained (Table 1, entry 1).

### Example 6 - Inventive process (catalytic fractionation of lignocellulose)

Poplar wood (16-17 g, 2 mm pellets, Fa. J. Rettenmaier & Söhne) and skeletal Ni catalyst (10 g, Raney Ni 2800 slurry, Sigma-Aldrich) was suspended in a 140 mL solution of 2-PrOH:water (7:3, v/v) in a 250 mL autoclave equipped with a mechanical stirrer. The suspension was heated from 25 to 180 °C within 1 h under mechanical stirring. The suspension was processed under autogeneous pressure at 180 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a brown oil (non-pyrolytic bio-oil, Figure 1B) was obtained. In turn, the pulp was washed with acetone, and then dried under vacuum evaporation. From 16.7 g of Poplar wood, 3.3 g of non-pyrolytic bio-oil and 10,4 g pulp were obtained (Table 1, entry 2).

### Example 7 - Inventive process (catalytic fractionation of lignocellulose)

Poplar wood (16-17 g, 2 mm pellets, Fa. J. Rettenmaier & Söhne) and skeletal Ni catalyst (10 g, Raney Ni 2800 slurry, Sigma-Aldrich) was suspended in a 140 mL solution of 2-PrOH:water (7:3, v/v) in a 250 mL autoclave equipped with a mechanical stirrer. The suspension was heated from 25 to 200 °C within 1 h under mechanical stirring. The suspension was processed under autogeneous pressure at 200 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a brown oil (non-pyrolytic bio-oil) was obtained. In turn, the pulp was washed with acetone, and then dried under vacuum evaporation. From 17.1 g of poplar wood, 3.4 g of non-pyrolytic bio-oil and 10,0 g pulp were obtained (Table 1, entry 3).

### Example 8 - Inventive process (catalytic fractionation of lignocellulose)

Poplar wood (16-17 g, 2 mm pellets, Fa. J. Rettenmaier & Söhne) and skeletal Ni catalyst (10 g, Raney Ni 2800 slurry, Sigma-Aldrich) was suspended in a 140 mL solution of 2-PrOH:water (7:3, v/v) in a 250 mL autoclave equipped with a mechanical stirrer. The suspension was heated from 25 to 220 °C within 1 h under mechanical stirring. The suspension was processed under autogeneous pressure at 220 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a brown oil (non-pyrolytic bio-oil) was obtained. In turn, the pulp was washed with acetone, and then dried under vacuum evaporation. From 16.7 g of poplar wood, 3.9 g of non-pyrolytic bio-oil and 8.6 g pulp were obtained (Table 1, entry 4).

### Example 9 - Inventive process (catalytic fractionation of lignocellulose)

Poplar wood (16-17 g, 2 mm pellets, Fa. J. Rettenmaier & Söhne) and skeletal Ni catalyst (10 g, Raney Ni 2800 slurry, Sigma-Aldrich) was suspended in a 140 mL solution of 2-PrOH in a 250 mL autoclave equipped with a mechanical stirrer. The suspension was heated from 25 to 180 °C within 1 h under mechanical stirring. The suspension was processed under autogeneous pressure at 180 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a brown oil (non-pyrolytic bio-oil) was obtained. In turn, the pulp was washed with acetone, and then dried under vacuum evaporation. From 15.8 g of poplar wood, 2.0 g of non-pyrolytic bio-oil and 13.8 g pulp were obtained (Table 1, entry 5).

### Example 10 - Inventive process (catalytic fractionation of lignocellulose)

Poplar wood (16-17 g, 2 mm pellets, Fa. J. Rettenmaier & Söhne) and skeletal Ni catalyst (10 g, Raney Ni 2800 slurry, Sigma-Aldrich) was suspended in a 140 mL solution of 2PrOH:MeOH (10:1, v/v) in a 250 mL autoclave equipped with a mechanical stirrer. The suspension was heated from 25 to 180 °C within 1 h under mechanical stirring. The suspension was processed under autogeneous pressure at 180 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a brown oil (non-pyrolytic bio-oil) was obtained. In turn, the pulp was washed with acetone, and then dried under vacuum evaporation. From 16,7 g of poplar wood, 2.1 g of non-pyrolytic bio-oil and 14,7 g pulp were obtained (Table 1, entry 6).

### Example 11 - Inventive process (catalytic fractionation of lignocellulose)

Poplar wood (16-17 g, 2 mm pellets, Fa. J. Rettenmaier & Söhne) and skeletal Ni catalyst (10 g, Raney Ni 2800 slurry, Sigma-Aldrich) was suspended in a 140 mL solution of 2-PrOH:water (9:1, v/v) in a 250 mL autoclave equipped with a mechanical stirrer. The suspension was heated from 25 to 180 °C within 1 h under mechanical stirring. The suspension was processed under autogeneous pressure at 180 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a brown oil (non-pyrolytic bio-oil, Figure 1B) was obtained. In turn, the pulp was washed with acetone, and then dried under vacuum evaporation. From 16.8 g of Poplar wood, 2.0 g of non-pyrolytic bio-oil and 12.1 g pulp were obtained (Table 1, entry 7).

### Example 12 - Inventive process (catalytic fractionation of lignocellulose)

Poplar wood (16-17 g, 2 mm pellets, Fa. J. Rettenmaier & Söhne) and skeletal Ni catalyst (10 g, Raney Ni 2800 slurry, Sigma-Aldrich) was suspended in a 140 mL solution of 2-PrOH:water (8:2, v/v) in a 250 mL autoclave equipped with a mechanical stirrer. The suspension was heated from 25 to 180 °C within 1 h under mechanical stirring. The suspension was processed under autogeneous pressure at 180 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a brown oil (non-pyrolytic bio-oil, Figure 1B) was obtained. In turn, the pulp was washed with acetone, and then dried under vacuum evaporation. From 16.7 g of Poplar wood, 3.0 g of non-pyrolytic bio-oil and 11.8 g pulp were obtained (Table 1, entry 8).

### Example 13 - Inventive process (catalytic fractionation of lignocellulose)

Poplar wood (16-17 g, 2 mm pellets, Fa. J. Rettenmaier & Söhne) and skeletal Ni catalyst (10 g, Raney Ni 2800 slurry, Sigma-Aldrich) was suspended in a 140 mL solution of 2-PrOH:water (5:5, v/v) in a 250 mL autoclave equipped with a mechanical stirrer. The suspension was heated from 25 to 180 °C within 1 h under mechanical stirring. The suspension was processed under autogeneous pressure at 180 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a brown oil (non-pyrolytic bio-oil, Figure 1B) was obtained. In turn, the pulp was washed with acetone, and then dried under vacuum evaporation. From 16.7 g of Poplar wood, 3.9 g of non-pyrolytic bio-oil and 11,7 g pulp were obtained (Table 1, entry 9).

### Example 14 - Comparative process (catalytic fractionation of lignocellulose under hydrogen pressure)

Poplar wood (2 g, 2 mm pellets, Fa. J. Rettenmaier & Söhne) and skeletal Ni catalyst (1 g, Raney Ni 2800 slurry, Sigma-Aldrich) was suspended in a 14 mL solution of 2-PrOH:H₂O (7:3, v/v) in a 35 mL autoclave equipped with a mechanical stirrer. The suspension was heated from 25 to 200 °C within 1 h under mechanical stirring. The suspension was processed under H₂ pressure (50 bar) at 200 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a brown oil (non-pyrolytic bio-oil) was obtained. In turn, the pulp was washed with acetone, and then dried under vacuum evaporation. From 2 g of poplar wood, 0.6 g of non-pyrolytic bio-oil and 1.0 g pulp were obtained (Table 1, entry 10).

### Example 15 - Inventive process (catalytic fractionation of lignocellulose)

Poplar wood (2 g, 2 mm pellets, Fa. J. Rettenmaier & Söhne) and skeletal Ni catalyst (1 g, Raney Ni 2800 slurry, Sigma-Aldrich) was suspended in a 14 mL solution of ethanol:H₂O (7:3, v/v) in a 35 mL autoclave equipped with a mechanical stirrer. The suspension was heated from 25 to 200 °C within 1 h under mechanical stirring. The suspension was processed under autogeneous pressure at 200 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a brown oil (non-pyrolytic bio-oil) was obtained. In turn, the pulp was washed with acetone, and then dried under vacuum evaporation. From 2 g of poplar wood, 0.6 g of non-pyrolytic bio-oil and 1.1 g pulp were obtained (Table 1, entry 11).

### Example 16 - Comparative process (catalytic fractionation of lignocellulose under hydrogen pressure)

Poplar wood (2 g, 2 mm pellets, Fa. J. Rettenmaier & Söhne) and skeletal Ni catalyst (1 g, Raney Ni 2800 slurry, Sigma-Aldrich) was suspended in a 14 mL solution of EtOH:H₂O (7:3, v/v) in a 35 mL autoclave equipped with a mechanical stirrer. The suspension was heated from 25 to 200 °C within 1 h under mechanical stirring. The suspension was processed under H₂ pressure (50 bar) at 200 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a brown oil (non-pyrolytic bio-oil) was obtained. In turn, the pulp was washed with acetone, and then dried under vacuum evaporation. From 2 g of poplar wood, 0.6 g of non-pyrolytic bio-oil and 1.1 g pulp were obtained (Table 1, entry 12).

### Example 17 - Reference process (Organosolv process)

Spruce wood (16-17 g, 2 mm pellets, Fa. J. Rettenmaier & Söhne) was suspended in a 140 mL solution of 2-PrOH:water (7:3, v/v) in a 250 mL autoclave equipped with a mechanical stirrer. The suspension was heated from 25 to 180 °C within 1 h under mechanical stirring. The autogenous pressure at 180 °C is 25 bar. The suspension was processed at 180 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a reddish-brown solid was obtained. In turn, the pulp was washed with acetone, and then dried under vacuum evaporation. From 16.8 g of spruce wood, 2.2 g of organosolv lignin and 13.2 g pulp were obtained.

### Example 18 - Inventive process (catalytic fractionation of lignocellulose)

Spruce wood (16-17 g, 2 mm pellets, Fa. J. Rettenmaier & Söhne) and skeletal Ni catalyst (10 g, Raney Ni 2800 slurry, Sigma-Aldrich) was suspended in a 140 mL solution of 2-PrOH:MeOH (10:1, v/v) in a 250 mL autoclave equipped with a mechanical stirrer. The suspension was heated from 25 to 180 °C within 1 h under mechanical stirring. The suspension was processed under autogeneous pressure at 180 °C for 3 h. In sequence, the mixture was left to cool down to room temperature. A reddish-brown solution was obtained after filtering off the wood fibers (pulp). The solvent was removed at 60 °C using a rotoevaporator. After solvent removal, a brown oil (non-pyrolytic bio-oil) was obtained. In turn, the pulp was washed with acetone, and then dried under vacuum evaporation. From 16,8 g of spruce wood, 2.4 g of non-pyrolytic bio-oil and 11.6 g pulp were obtained (Table 1, entry 13).

### Example 19 - Reference process (Oraanosolv process)

Sugarcane bagasse (6-7 g, 2 mm pellets) was suspended in a 140 mL solution of 2-PrOH:water (7:3, v/v) in a 250 mL autoclave equipped with a mechanical stirrer. The suspension was heated from 25 to 180 °C within 1 h under mechanical stirring. The autogenous pressure at 180 °C is 25 bar. The suspension was processed at 180 °C for 3 h. In sequence, the mixture was left to cool down to room temperature. A reddish-brown solution was obtained after filtering off the fibers (pulp). The solvent was removed at 60 °C using a rotoevaporator. After solvent removal, a reddish-brown solid was obtained. In turn, the pulp was washed with acetone, and then dried under vacuum evaporation. From 6.2 g of sugarcane bagasse, 1.3 g of organosolv lignin and 4.8 g pulp were obtained.

### Example 20 - Inventive process (catalytic fractionation of lignocellulose)

Sugarcane bagasse (6-7 g, 2 mm pellets) and skeletal Ni catalyst (10 g, Raney Ni 2800 slurry, Sigma-Aldrich) was suspended in a 140 mL solution of 2-PrOH:MeOH (10:1, v/v) in a 250 mL autoclave equipped with a mechanical stirrer. The suspension was heated from 25 to 180 °C within 1 h under mechanical stirring. The suspension was processed under autogeneous pressure at 180 °C for 3 h. In sequence, the mixture was left to cool down to room temperature. A reddish-brown solution was obtained after filtering off the fibers (pulp). The solvent was removed at 60 °C using a rotoevaporator. After solvent removal, a brown oil (non-pyrolytic bio-oil) was obtained. In turn, the pulp was washed with acetone, and then dried under vacuum evaporation. From 6.2 g of sugarcane bagasse, 1.6 g of non-pyrolytic bio-oil and 4.4 g pulp were obtained (Table 1, entry 14).

### Example 21 - Enzymatic hydrolysis of the pulps and poplar wood

The enzymatic saccharification was performed in a jacket reactor (150 mL) containing an 1 wt % (dry basis) suspension of the substrate dispersed in 0.1 mol L⁻¹ acetate buffer (100 mL, pH 4.5). The mixture was stirred at 45 °C. The reaction was initiated by adding Celluclast® into the suspension (0.5 mL, 350 U, aqueous solution, T. reesei, EC 3.2.1.4, Sigma). At defined times, aliquots of the reaction mixture were taken. The samples were immediately heated at 100 °C for 10 min to inactivate the enzymatic preparation. Next, they were centrifuged and filtered. The formation of glucose was determined by HPLC. Typically, the filtered sample was then analyzed on an HPLC (Perkin Elmer Series 200) equipped with a column Nucleogel Ion 300 OA (Macherey-Nagel). Analysis conditions: mobile phase: H₂SO₄ 5 mM; flow: 0.5 mL/min; back-pressure: 62 bar; temperature: 80 °C. The results are displayed in Figure 4.

### Analysis of the products

The determination of humidity of the pulps and starting material was determined on a thermobalance (Ohaus MB25). Typically, the samples (2 to 3 g) were heated up to 105 °C for 10 min. The humidity was determined as the weight loss after 10 min.
For the determination of the ash content, ca. 100 mg of carbohydrate fraction or starting material were placed into a quartz crucible. The crucibles were then placed in an oven and heated up from room temperature to 450 °C in 1 h; 450 °C to 750 °C in 2 h; 750 °C for another additional 2 h. Henceforth, the crucibles were cooled to room temperature and weighted. The residue remained after the treatment was considered as the ash content. For each sample, this analysis was repeated four times.

The composition of the pulps and starting material in terms of glucans, xylans and elemental analysis followed the same procedure as for lignin analysis. Pulps and stating materials were milled with cryo-milling (CryoMill Retsch) with the following milling program: precooling 10 min, 5 s⁻¹; milling 5 min, 20 s⁻¹. The milled sample (50 mg) was then saccharified adding a sulfuric acid solution 72% v/v (0.5 mL) and stirring at 38 °C for 5 min. After this time, distillated water (10 mL) was added into the mixture and the saccharification performed at 130 °C for 1.5 h. The filtered solution was then analyzed on an HPLC (Perkin Elmer Series 200) equipped with a column Nucleogel Ion 300 OA (Macherey-Nagel). Analysis conditions: mobile phase: H₂SO₄ 5 mM; flow: 0.5 mL/min; back-pressure: 62 bar; temperature: 80 °C. For the determination of the Klason lignin content, the above-mentioned saccharification procedure was performed on a ten-fold larger scale. After saccharification at 130 °C for 1.5 h, the residue (Klason lignin) was filtered through a membrane (1 µm, Millipore), the solid was washed with distilled water until a neutral pH. Finally, the solid was dried at 60 °C for 1-2 days. The weight of this dried solid was then considered as residual Klason lignin in the pulps or starting material. The results are summarized in Table 3.

### GC×GC Analysis of the non-pyrolytic bio-oils

The reaction mixtures were analyzed using 2D GC×GC-MS (1st column: Rxi-1ms 30 m, 0.25 mm ID, df 0.25 µm; 2nd column: BPX50, 1 m, 0.15 mm ID, df 0.15 µm) in a GC-MS-FID 2010 Plus (Shimadzu) equipped with a ZX1 thermal modulation system (Zoex). The temperature program started with an isothermal step at 40 °C for 5 min. Next, the temperature was increased from 40 to 300 °C by 5.2 °C min⁻¹. The program finished with an isothermal step at 300 °C for 5 min. The modulation applied for the comprehensive GC×GC analysis was a hot jet pulse (400 ms) every 9000 ms. The 2D chromatograms were processed with GC Image software (Zoex). The products were identified by a search of the MS spectrum with the MS library NIST 08, NIST 08s, and Wiley 9. The semi-quantification of the products was performed using the GC×GC-FID images. The semiquantitative results are presented in Table 2.

Apparent molecular weight distribution of the organosolv lignin and non-pyrolytic bio-oils. In THF, about 2 to 10 mg of the sample was dissolved. The sample solutions were analyzed on an HPLC (Perkin Elmer Series 200) equipped with GPC columns (four combined columns, TSKgel Super HZ1000 (two), HZ2000, HZ3000 from Tosoh Bioscience). Analysis conditions: mobile phase: THF; flow: 0.4 mL/min; back-pressure: 71 bar; temperature 60 °C. The analytes were detected by a diode array detector at 236 nm. The result are shown in Figure 2.

Crystallinity index of the pulps was determined by X-ray diffraction (as reported by S. Park et al. Biotechnology for Biofuels 2010, 3:10). The powder X-ray diffraction patterns of the samples were obtained with a STOE STADIP transmission diffractometer operated at 50 kV and 40 mA, using monochromatized Mo-Ka1 radiation and a position sensitive detector. The results are displayed in Figure 3.

## Claims

1. Process for catalytic fractionation of lignin containing biomass for the production of non-pyrolytic bio-oil in addition to a high-quality pulp comprising cellulose and hemicellulose as a byproduct, the process comprising the steps of:
a. subjecting preferably particulate lignocellulose material to a treatment at the temperature range from 130 °C to 300 °C, preferably 160 °C to 260 °C, most preferably 170 °C to 240 °C, in a solvent system comprising an organic solvent or mixture of solvents being miscible with water, in the presence of a transition metal catalyst, preferably skeletal Ni catalyst, in absence of externally supplied molecular hydrogen, under autogeneous pressure in a reaction vessel for a reaction time of 0.01 to 8 hours,
b. removing the catalyst from the reaction mixture, preferably by means of magnetic forces,
c. filtering the reaction mixture to separate the raw non-pyrolytic bio-oil from the pulp, and optionally
d. removing the solvent system from the filtrate to concentrate the non-pyrolytic bio-oil;
wherein the transition metal catalyst is used at weight ratio of catalyst-to-substrate from 0.001 to 10.

2. Process according to claim 1 wherein the lignin containing material is a lignocellulosic material such as hardwood, softwood, straw, sugar cane bagasse, perennial grasses and crop residues.

3. Process according to any of claims 1 to 2 wherein the solvent system is a solvent mixture of a lower aliphatic alcohol having 1 to 6 carbon atoms and waterpreferably in a v/v-ratio of 99.9/0.1 to 0.1/99.9, preferably 10/90 to 90/10, most preferably 20/80 to 80/20, alcohol/water solutions.

4. Process according to any of claims 1 to 3, wherein the solvent system is a solvent mixture of secondary alcohols, such as 2-PrOH, 2-butanol, cyclohexanol, and water and preferably in a v/v-ratio of 80/20 to 20/80, alcohol/water solutions.

5. Process according to any of claims 1 to 4, wherein the solvent system additionally comprises at least one further solvent, such as aliphatic or aromatic ketones having 1 to 10 carbon atoms, ethers having 2 to 10 carbon atoms, cyclohexanols, cyclic ethers, preferably, tetrahydrofuran, methyltetrahydrofurans or dioxanes, and esters, preferably ethylacetate and methylacetate, in the solvent fraction as modifiers in order to adjust the phenol content in the obtained non-pyrolytic bio-oil.

6. Process according to claim 5 wherein the volume fraction of the modifier in the solvent mixture, also containing secondary alcohol or mixture thereof and eventually water, ranges from 0.1 to 99.9 %, preferably 1 to 95 %, most preferably 5 to 70 %.

7. The process as claimed in any of claims 1 to 6 wherein the metal catalyst can be a skeletal transition metal catalyst or supported transition metal catalyst or mixture, preferably skeletal nickel, iron, cobalt or copper catalysts or a mixture thereof.

8. The process as claimed in claim 7 wherein the metal is selected from nickel, iron, cobalt, copper, ruthenium, palladium, rhodium, osmium iridium, rhenium or mixtures thereof, preferably nickel, iron, cobalt, ruthenium, copper or any mixture thereof.

9. The process as claimed in any of claims 1 to 8 wherein the catalyst is a bifunctional solid comprising metal functionality and acid sites, said acid sites being preferably functional sites having acidic Bronsted or Lewis functionality or both.

10. Process according to any of claims 1 to 9 wherein the catalyst is used at weight ratio of catalyst-to-substrate from 0.01 to 5, more preferably 0.05 to 2.

## Patentansprüche

1. Verfahren für die katalytische Fraktionierung von ligninhaltiger Biomasse für die Produktion von nichtpyrolytischem Bio-Öl zusätzlich zu einem hochwertigen Faserstoff, der Zellulose und Semizellulose enthält, als einem Nebenprodukt, wobei das Verfahren die folgenden Schritte umfasst:
a. Unterziehen von vorzugsweise partikelförmigem Lignozellulosematerial einer Behandlung in einem Temperaturbereich von 130 °C bis 300 °C, vorzugsweise 160 °C bis 260 °C, am meisten bevorzugt 170 °C bis 240 °C, in einem Lösemittelsystem, das ein organisches Lösemittel oder eine Mischung von Lösemitteln, die mit Wasser mischbar sind, enthält, in Anwesenheit eines Übergangsmetallkatalysators, vorzugsweise eines Skelett-Ni-Katalysators, in Abwesenheit von extern zugeführtem molekularem Wasserstoff, unter autogenem Druck, in einem Reaktionsgefäß für eine Reaktionszeit von 0,01 bis 8 Stunden.
b. Entfernen des Katalysators aus der Reaktionsmischung, vorzugsweise mittels magnetischer Kräfte.
c. Filtrieren der Reaktionsmischung, um das rohe, nicht-pyrolytische Bio-Öl von dem Faserstoff zu trennen, und wahlweise
d. Entfernen des Lösemittelsystems aus dem Filtrat, um das nicht-pyrolytische Bio-Öl zu konzentrieren;
wobei der Übergangsmetallkatalysator bei einem Gewichtsverhältnis von Katalysator-zu-Substrat von 0,001 bis 10 verwendet wird.

2. Verfahren nach Anspruch 1, wobei das ligninhaltige Material ein Lignozellulosematerial wie Hartholz, Weichholz, Stroh, Zuckerrohrbagasse, mehrjährige Gräser und Ernterückstände ist.

3. Verfahren nach einem der Ansprüche 1 bis 2, wobei das Lösemittelsystem eine Lösemittelmischung eines niedrigeren aliphatischen Alkohols ist, der 1 bis 6 Kohlenstoffatome und Wasser vorzugsweise in einem V/V-Verhältnis von 99,9/0,1 bis 0,1/99,9, vorzugsweise 10/90 bis 90/10, am meisten bevorzugt 20/80 bis 80/20 Alkohol/Wasserlösungen enthält.

4. Verfahren nach einem der Ansprüche 1 bis 3, wobei das Lösemittelsystem eine Lösemittelmischung von sekundären Alkoholen wie 2-PrOH, 2-Butanol, Cyklohexanol und Wasser und vorzugsweise in einem V/V-Verhältnis von 80/20 bis 20/80 Alkohol/Wasserlösungen ist.

5. Verfahren nach einem der Ansprüche 1 bis 4, wobei das Lösemittelsystem zusätzlich mindestens ein weiteres Lösemittel wie aliphatische oder aromatische Ketone mit 1 bis 10 Kohlenstoffatomen, Ether mit 2 bis 10 Kohlenstoffatomen, Cyclohexanole, zyklische Ether, vorzugsweise Tetrahydrofuran, Methyltetrahydrofurane oder Dioxane und Ester, vorzugsweise Ethylacetat und Methylacetat, in der Lösemittelfraktion als Modifizierer enthält, um den Phenolgehalt in dem erhaltenen nicht-pyrolytischen Bio-Öl einzuregeln.

6. Verfahren nach Anspruch 5, wobei die Volumenfraktion des Modifizierers in der Lösemittelmischung, die ebenfalls sekundären Alkohol oder eine Mischung davon und schließlich Wasser enthält, von 0,1 bis 99,9 %, vorzugsweise 1 bis 95 %, am meisten bevorzugt 5 bis 70 %, beträgt.

7. Verfahren nach einem der Ansprüche 1 bis 6, wobei der Metallkatalysator ein Skelettübergangsmetallkatalysator oder geträgerter Übergangsmetallkatalysator oder eine Mischung, vorzugsweise Skelettnickel-, Eisen-, Kobalt- oder Kupferkatalysatoren oder eine Mischung davon sein kann.

8. Verfahren nach Anspruch 7, wobei das Metall aus Nickel, Eisen, Kobalt, Kupfer, Ruthenium, Palladium, Rhodium, Osmium Iridium, Rhenium oder Mischungen davon, vorzugsweise Nickel, Eisen, Kobalt, Ruthenium, Kupfer oder jede Mischung davon ausgewählt wird.

9. Verfahren nach einem der Ansprüche 1 bis 8, wobei der Katalysator ein bifunktioneller Feststoff ist, der Metallfunktionalität und Säurestellen umfasst, wobei Säurestellen vorzugsweise funktionelle Stellen sind, die saure Brønsted- oder Lewis-Funktionaltät oder beides aufweisen.

10. Verfahren nach einem der Ansprüche 1 bis 9, wobei der Katalysator bei einem Gewichtsverhältnis von Katalysator-zu-Substrat von 0,01 bis 5, mehr bevorzugt 0,05 bis 2, verwendet wird.

## Revendications

1. Procédé de fractionnement catalytique de biomasse contenant de la lignine pour la production de bio-huile non pyrolytique en plus d'une pâte de haute qualité comprenant de la cellulose e de l'hémicellulose comme sous-produit, le procédé comprenant les étapes de :
a. soumission de préférence de la matière de lignocellulose particulaire à un traitement à la plage de température de 130 à 300 °C, de préférence 160 à 260 °C, de préférence entre toutes de 170 à 240 °C, dans un système de solvant comprenant un solvant organique ou un mélange de solvants qui sont miscibles dans l'eau, en présence d'un catalyseur de métal de transition, de préférence un catalyseur de Ni squelettique, en absence d'hydrogène moléculaire fourni de manière externe, sous pression autogène dans un récipient de réaction durant un temps de réaction de 0,01 à 8 heures,
b. élimination du catalyseur du mélange réactionnel de préférence au moyen de forces magnétiques,
c. filtration du mélange réactionnel pour séparer la bio-huile non pyrolytique brute de la pâte, et éventuellement
d. élimination du système de solvant du filtrat pour concentrer la bio-huile non pyrolytique ;
où le catalyseur de métal de transition est utilisé à un rapport en poids de catalyseur à substrat de 0,001 à 10.

2. Procédé selon la revendication 1 dans lequel la matière contenant de la lignine est une matière lignocellulosique telle que du bois dur, du bois tendre, de la paille, de la bagasse de canne à sucre, des graminées vivaces et des résidus de récolte.

3. Procédé selon l'une quelconque des revendications 1 à 2, dans lequel le système de solvant est un mélange de solvants d'un alcool aliphatique inférieur ayant 1 à 6 atomes de carbone et de l'eau de préférence dans un rapport v/v de 99,9/0,1 à 0,1/99,9, de préférence 10/90 à 90/10, de préférence entre toutes de 20/80 à 80/20, de solutions d'alcool/eau.

4. Procédé selon l'une quelconque des revendications 1 à 3, dans lequel le système de solvant est un mélange de solvants d'alcools secondaires, tels que le 2-PrOH, le 2-butanol, le cyclohexanol et l'eau et de préférence dans un rapport v/v de 80/20 à 20/80, de solutions d'alcool/eau.

5. Procédé selon l'une quelconque des revendications 1 à 4, dans lequel le système de solvant comprend de plus au moins un autre solvant, tel que des cétones aliphatiques ou aromatiques ayant 1 à 10 atomes de carbone, des éthers ayant 2 à 10 atomes de carbone, des cyclohexanols, des éthers cycliques, de préférence, le tétrahydrofuranne, des méthyltétrahydrofurannes ou des dioxannes, et des esters, de préférence l'éthylacétate et le méthylacétate, dans la fraction de solvant comme modificateurs pour ajuster la teneur en phénol dans la bio-huile non pyrolytique obtenue.

6. Procédé selon la revendication 5 dans lequel la fraction de volume du modificateur dans le mélange de solvants, contenant aussi un alcool secondaire ou un de leurs mélanges et éventuellement de l'eau, se situe dans la plage allant de 0,1 à 99,9 %, de préférence de 1 à 95 %, de préférence entre toutes de 5 à 70 %.

7. Procédé selon l'une quelconque des revendications 1 à 6 dans lequel le catalyseur de métal peut être un catalyseur de métal de transition squelettique ou un catalyseur de métal de transition supporté ou un mélange, de préférence des catalyseurs de nickel, de fer, de cobalt ou de cuivre squelettiques ou un de leurs mélanges.

8. Procédé selon la revendication 7 dans lequel le métal est choisi parmi le nickel, le fer, le cobalt, le cuivre, le ruthénium, le palladium, le rhodium, l'osmium iridium, le rhénium ou leurs mélanges, de préférence le nickel, le fer, le cobalt, le ruthénium, le cuivre ou l'un quelconque de leurs mélanges.

9. Procédé selon l'une quelconque des revendications 1 à 8 dans lequel le catalyseur est un solide bifonctionnel comprenant une fonctionnalité de métal et des sites acides, lesdits sites acides étant de préférence des sites fonctionnels ayant une fonctionnalité acide de de Bronsted ou de Lewis ou les deux.

10. Procédé selon l'une quelconque des revendications 1 à 9, dans lequel le catalyseur est utilisé à un rapport en poids de catalyseur à substrat de 0,01 à 5, davantage de préférence de 0,05 à 2.
